# EUROPEAN PATENT APPLICATION

(11) **EP 3 141 132 A1**
(43) Date of publication of application: **15.03.2017**
(21) Application number: 16187915.0
(22) Date of filing: 08.09.2016
(51) Int. Cl.: A23L 3/36, A23P 20/12, A23L 5/10, A23L 29/00

(54) **MICROWAVEABLE COATED FOOD PRODUCT AND METHOD OF MANUFACTURE**

(30) Priority: 09.09.2015 EP 15184556
(71) Applicant: Crisp Sensation Holding S.A., 1208 Geneva (CH)
(72) Inventor: MICHIELS, Wilhelmus Johannes Gerardus, 6301 GS Nederweert (NL); METHORST, Roy, 4847 AA Teteringen (NL)
(74) Representative: Browne, Robin Forsythe

(57) **Abstract**

A method of preparing a frozen, microwaveable, coated food product comprising the successive steps of:
providing a portion of a solid or solidified substrate;
preparing a breaded portion comprising the portion of substrate and a crumb-based coating by the steps of:
coating the portion with a first aqueous coating liquid to form a primary coated portion;
applying a coating of bonding crumb to the primary coated portion to form a bonding crumb coated portion;
applying a second aqueous coating liquid to the bonding crumb coated portion to form a secondary coated portion;
applying a coating of coating crumb to the secondary coated portion to form a breaded portion;
frying the breaded portion by contacting said breaded portion for at least 100 seconds with hot oil having a temperature of at least 150°C; and
freezing the fried coated portion;
wherein a moisture controlling metal salt is present in at least one of the coating liquids and crumbs used in the preparation of the breaded portion, said microwave absorbing metal salt being selected from metal phosphates, metal carbonates, metal hydroxides, metal citrates, metal gluconates and combinations thereof;
wherein the total amount of the metal salt provided in the crumb-based coating may be at least 0.5wt%, preferably 1wt% to6wt% by weight of the dry matter contained in said crumb-based coating.

## Description

### TECHNICAL FIELD OF THE INVENTION

This invention relates to coated food products which may be cooked or reheated using a microwave oven or using a combined microwave and conventional oven, referred to collectively in this specification as a microwave oven, or using a conventional thermal oven. The invention relates particularly but not exclusively to crumb coated products, particularly chicken nuggets or other products wherein a meat, fish, poultry, vegetable, fruit, fungus materials or dairy products substrate is coated with two or more layers of crumb, wherein the products may be cooked or reheated from a frozen state using a microwave oven, a combined microwave and thermal oven or conventional oven.

The invention also relates to a method of manufacturing such a microwaveable or thermally reheatable coated food product and to an apparatus for carrying out such method.

### BACKGROUND OF THE INVENTION

Use of a microwave or combination oven for cooking or reheating coated products is problematic because the substrate is heated from the inside by the microwave radiation generating steam which may damage the coating layers. Conventional coated products are therefore unsuitable for use in microwave or combination ovens.

Many food materials, for example natural muscle of poultry, fish or red meat or vegetable or processed foods, contain a large percentage of water. Most fresh foods contain more than 60% water. Some of this water is bound, that is tightly attached to the constituent cells. The remaining mobile water is available and can be frozen. If a food product is frozen to a core temperature of between -1°C and -30°C or lower and is placed and irradiated in a microwave oven, the microwave energy will be primarily absorbed by the frozen available water. Although in conventional cooking heat is applied from the exterior, in microwave cooking heat is generated from within. The process of heating can be very rapid so that available water is converted into steam. Water can continue to be expelled from the product when a food product is allowed to stand after heating in a microwave oven, or on a holding plate. This is particularly noticeable for example when heating frozen fish muscle. The loss of water causes any food coating, particularly a batter, pastry or breadcrumb coating to become soggy and unpalatable. In addition the core of the substrate may become dry with an adverse effect on palatability.

WO 93/03634 describes a method of producing a coated foodstuff which may be reheated by microwave irradiation, the method comprising: applying to the foodstuff a predust; applying a batter to the predusted foodstuff; frying the battered foodstuff, and cooling the fried product.

WO 95/30344 describes a process for microwaveable coated food products comprising the steps of predust application, secondary coated portion application, crumb application, flash frying freezing and packaging.

WO 97/03572 describes a process for microwaveable coated food products, such as chicken nuggets, comprising the steps of predust application, secondary coated portion application, crumb application, flash frying, freezing and packaging.

WO 10/001101 describes a method of manufacture of a crumb coated food product comprising the steps of: forming an aqueous mixture comprising: flour, sodium bicarbonate, optional additives and water; adding the mixture into an extruder; adding an aqueous gelling agent to the extruder; extruding the resultant mixture at a temperature greater than 100°C to form an expanded porous product; drying the product, and milling the dried product to form a crumb. The crumb so obtained is particularly suitable for use in the preparation of coated food products that are cooked or reheated from a frozen state using a microwave oven.

### SUMMARY OF THE INVENTION

The present invention relates to a method for the production of a frozen coated food product that can be reheated or cooked in a microwave oven to produce a ready-to-eat product with outstanding sensory properties, especially a crunchy coating in combination with a succulent moist core.

In a first aspect of the invention there is provided a method of preparing a frozen, microwaveable, coated food product comprising the successive steps of:
providing a portion of a solid or solidified substrate;
preparing a breaded portion comprising the portion of substrate and a crumb-based coating by the steps of:
   coating the portion with a first aqueous coating liquid to form a primary coated portion;
   applying a coating of bonding crumb to the primary coated portion to form a bonding crumb coated portion;
   applying a second aqueous coating liquid to the bonding crumb coated portion to form a secondary coated portion;
   applying a coating of coating crumb to the secondary coated portion to form a breaded portion;
   frying the breaded portion by contacting said breaded portion for at least 100 seconds with hot oil having a temperature of at least 150°C; and
   freezing the fried coated portion;
   wherein a moisture controlling metal salt is present in at least one of the coating liquids and crumbs used in the preparation of the breaded portion, said microwave absorbing metal salt being selected from metal phosphates, metal carbonates, metal hydroxides, metal citrates, metal gluconates and combinations thereof;
   wherein the total amount of the metal salt provided in the crumb-based coating may be at least 0.5wt%, preferably 1wt% to 6wt% by weight of the dry matter contained in said crumb-based coating.

The moisture controlling salt in the aqueous coating liquid may provide various functions.

In a first embodiment the salt serves to reduce or prevent migration of moisture from the substrate to one or more of the coating layers, particularly the outer layer of the coating crumb, during preparation of the product, intermediate storage and handling of the product during subsequent manufacturing steps, during freezing or upon storage in a freezer, chilled or at ambient temperature before reheating and serving.

In a second embodiment the metal salt may alternatively or in additional serve as a microwave susceptor, so that the aqueous coating liquid containing the salt becomes heated at an increased rate upon exposure to microwave radiation, As a result, the water contained in the aqueous coating liquid is evaporated at an increased rate. Condensation of water vapour is reduced. Passing out water from the core is reduced. This results in a microwave heated product with an improved crunchy coating in combination with a succulent moist core.

In a second aspect of the invention of a method of preparing a frozen, microwaveable, coated food product comprises the successive steps of:
providing a portion of a solid or solidified substrate;
coating the portion with a first aqueous coating liquid to form a primary coated portion;
applying a coating of bonding crumb to the primary coated portion to form a bonding crumb coated portion;
applying a second aqueous coating liquid to the bonding crumb coated portion to form a secondary coated portion;
applying a coating of coating crumb to the secondary coated portion to form a breaded portion;
frying the breaded portion by contacting said breaded portion for at least 100 seconds with hot oil having a temperature of at least 150° C; and
freezing the fried coated portion;
wherein the first aqueous coating liquid and/or the second aqueous coating liquid contains at least 0.5wt%, preferably 1wt% to 6wt% of a moisture controlling metal salt selected from metal phosphates, metal carbonates, metal hydroxides, metal citrates, metal gluconates and combinations thereof.

In a third aspect of the invention a frozen, microwaveable, coated food product comprises:
a core of cooked edible material,
a fried crumb coating that completely envelops the core of cooked edible material, said fried crumb coating containing at least 0.5wt%, preferably at least 2wt% of a moisture controlling metal salt selected from: metal phosphates, metal carbonates, metal hydroxides, metal citrates, metal gluconates and combinations thereof.

### DETAILED DESCRIPTION OF THE INVENTION

Percentages and other quantities referred to in this specification and claims are by dry weight unless indicated otherwise and are selected from any ranges quoted to total 100%.

The moisture controlling salt in the coating may serve as a microwave susceptor. The aqueous coating liquid or crumb containing the salt may become heated at an increased rate upon exposure to microwave radiation, As a result, the water contained in the aqueous coating liquid or any water in or adjacent the crumb is caused to evaporate at an increased rate. Condensation of water vapour is reduced. Passing out of water from the core is reduced. This results in a microwave heated product with an improved crispy and crunchy coating in combination with a succulent moist core.

The moisture controlling salts may be employed as anhydrous salts, hydrated salts and combinations thereof.

Preferably the moisture controlling metal salt is a salt of a metal selected from: iron, calcium, magnesium, zinc, copper, sodium, potassium and combinations thereof.

More preferably the moisture controlling metal salt is a salt of a metal selected from: iron, calcium, magnesium and combinations thereof.

Even more preferably the moisture controlling metal salt is calcium phosphate.

In certain embodiments, the moisture controlling metal salt may have a water solubility at 20°C of less than 60 g/l, more preferably of less than 20 g/l, even more preferably of less than 5 g/l. When the salt is insoluble or poorly soluble in water, a finely divided powder of the salt may be added to the coating liquid or liquid ingredient with mixing to form a suspension. Preferably the particle size is sufficiently fine to form a homogeneous suspension which is stable during the timescale of the manufacturing process and does not form a sediment.

Various phosphates of these metals may be used, for example orthophosphates, pyrophosphates, polyphosphates or higher condensed phosphates. Alternatively, carbonates, hydroxides or carboxylates such as citrates or gluconates may be employed.

The moisture controlling metal salt may be selected from: iron(III) orthophosphate (FePO₄), iron(III) pyrophosphate (Fe₄(P₂O₇)₃), monocalcium phosphate (Ca(H₂PO₄)₂), dicalcium phosphate (CaHPO₄), tricalcium phosphate (Ca3(PO₄)₃OH), acid calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium metaphosphate ([Mg(PO₃)₂]ₙ), magnesium pyrophosphate (Mg₂P₂O₇), trizinc phosphate (Zn₃(PO₄)₂), zinc pyrophosphate (Zn₂P₂O₇), copper(II) pyrophosphate (Cu₂P₂O₇), sodium aluminium phosphate, acidic sodium aluminium sulphate, calcium carbonate (CaCO₃) magnesium hydroxide (Mg(OH)₂), tricalcium citrate, calcium gluconate, tetrasodium pyrophosphate (Na₄P₂O₇) and combinations thereof.

Preferably the microwave absorbing metal salt is selected from: iron(III) orthophosphate (FePO₄), iron(III) pyrophosphate (Fe₄(P₂O₇)₃), acid calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium pyrophosphate (Mg₂P₂O₇), magnesium hydroxide (Mg(OH)₂), tetrasodium pyrophosphate (Na₄P₂O₇) and combinations thereof.

A particularly advantageous salt is selected from: monocalcium phosphate (Ca(H₂PO₄)₂), dicalcium phosphate (CaHPO₄), tricalcium phosphate (Ca3(PO₄)₃OH), acid calcium pyrophosphate (CaH2P₂O₇) and mixtures thereof

Alternatively the first aqueous coating liquid includes a metal salt selected from: iron (III) orthophosphate (FePO₄), iron(III) pyrophosphate (Fe₄(P₂O₇)₃) and combinations thereof.

Advantageously, the aqueous coating liquids employed in accordance with the present invention are not batter compositions. More preferably, these aqueous coating liquids have flour content of less than 10wt%, more preferably of less than 5wt%. Flour is most preferably not present in the aqueous coating.

Food products in accordance with this invention have the advantage that the fried coating may have a weight which forms a smaller proportion of the total weight and which may be thinner than a similar product having a batter coating layer. The coating may be crisper and may not exhibit the dough-like taste of a battered product.

In a preferred embodiment the fried coating that envelops the core of the edible material has a weight equal to 5-85wt% of the food product, said coating comprising at least four coating layers, successively including a primary aqueous coating, a bonding crumb layer, a secondary aqueous coating and a coating crumb layer.

The fried crumb coating preferably contains at least 0.5wt%, preferably at least 2wt% of a moisture controlling metal salt selected from: metal phosphates, metal carbonates, metal hydroxides, metal citrates, metal gluconates and combinations thereof.

In another embodiment one or both of the bonding crumb layer and the outer crumb layer contain at least about 80wt% of a hydrocolloid containing milled farinaceous dough extrudate containing about 0.05wt% to about 5wt% of added hydrocolloid.

The term "added hydrocolloid" as used herein refers to hydrophilic polymers that are not naturally present in the farinaceous component of a dough extrudate and that are capable of increasing the viscosity of an aqueous medium to which they have been added. These hydrophilic polymers are suitably selected naturally occurring gums.

The primary aqueous coating liquid preferably contains about 10wt% to about 50wt% of cellulose gum by weight of the dry matter that is contained in said coating liquid. Preferably, the cellulose gum is a cellulose ether, more preferably methyl cellulose.

In a preferred embodiment the primary aqueous coating liquid comprises, by weight of dry matter:

| | |
|---|---|
| cellulose gum | 15-35wt% |
| modified starch | 15-40wt% |
| hydrocolloid | 20-40wt% |
| protein component | 10-30wt% |
| Total | 100wt% |

Preferably the primary aqueous coating liquid comprises, by weight of dry matter:

| | |
|---|---|
| cellulose gum | 20-30wt% |
| modified starch | 20-40wt% |
| hydrocolloid | 20-30wt% |
| egg albumen | 10-30wt% |
| Total | 100wt% |

A particularly advantageous primary aqueous coating liquid comprises, by weight of dry matter:

| | |
|---|---|
| cellulose gum | 25wt% |
| modified starch | 35wt% |
| xanthan gum | 25wt% |
| egg albumen | 15wt% |
| Total | 100wt% |

The primary or secondary aqueous coating liquids may contain at least 95wt% water. The amount of dry solids is preferably from 0.5wt% to 3wt%, particularly 1wt% to 2.5wt%, especially 1wt% to 2wt%. Advantageous coating liquids contain 1wt%, 1.5wt% or 2wt% of dry solids.

Demineralised water may be used. The demineralised water when used may contain no more than 20 parts per billion (ppb) preferably no more than 2 ppb of inorganic minerals, particularly of the microwave absorbing metal referred to above.

The balance of the coating liquids may be water, although vegetable oil, for example in an amount of 5wt% may be also present and may be used as a heat transfer medium, allowing the coating to be heated to a higher temperature during frying.

A preferred moisture controlling metal salt in the first aqueous coating liquid is an iron salt, particularly iron (III) phosphate in an amount of 1-5wt%, preferably 1-3wt% of the weight of the aqueous coating.

Use of an iron salt as a moisture controlling metal salt in the primary coating liquid has been found to yield an overall crisper coated product.

The primary and secondary coating solutions may be applied to the substrate pieces using tempura dippers. An air knife or other air blower may be provided for removing any excess liquid from the coated substrate pieces.

The uptake of the first or second aqueous liquids may be about 10wt% to about 20wt%, more typically about 15wt% relative to the weight of the substrate.

Application of a coating of bonding crumb is facilitated by use of the primary aqueous coating liquid since the crumb particles will not adhere sufficiently to a relatively dry substrate. The application of the primary aqueous coating liquid additionally offers the advantage that it may reduce loss of moisture and uptake of oil by the substrate during frying due to stabilising properties of the aqueous coating liquid. Use of a conventional flour or breadcrumb based predust in place of the aqueous liquid would not cause the crumb to adhere sufficiently to the substrate and would confer absorbent properties rather than moisture resistance as achieved by the present invention.

The aqueous primary or secondary coating liquids preferably have a minimum viscosity of 300 cP, measured using a Brookfield viscometer with a number 3 spindle at 60 rpm at 10°C. More preferably, the viscosity lies within the range of 350-450 cP, more preferably in the range of 380-420 cP.

The bonding crumb preferably comprises a crumb formed from a dough which has been co-extruded with a gum, as disclosed in WO 2010/001101, the disclosure of which is incorporated herein by reference for all purposes.

The bonding crumb may have a dimension less than 0.8mm.

The bonding crumb may be provided as a component of a bonding crumb composition which comprises the extruded crumb together with a polyglucose component and optional further ingredients. A preferred polyglucose component is maltodextrin, although a mixture of maltodextrin and polydestrose may be used. An amount of about 1wt% to about 15wt%, of polyglucose component, preferably about 7wt% to about 13wt%, more preferably about 10wt% may be employed. The bonding crumb composition may comprise about 70-90wt%, preferably about 75-85wt%, typically 81wt% of the extruded crumb by dry weight.

In preferred embodiments the bonding crumb component further comprises a moisture controlling metal salt compound. The microwave absorbing metal salts disclosed above may be employed. Use of calcium phosphate is preferred. An amount of the moisture controlling salt of about 1wt% to about 10wt%, preferably about 4wt% to about 8wt%, more preferably about 6wt% may be used.

The primary coating liquid may further comprise a pH adjuster, for example sodium carbonate. A typical amount may be about 2wt% of the weight of the liquid. The pH of the liquid may be between pH 4 and pH 7, typically about pH 5.

The bonding crumb composition may further include an oleophilic carrier, for example edible oil, preferably a vegetable oil in an amount of about 1wt%.

The weight of the bonding crumb composition may be employed in a concentration of about 5wt% to about 15wt%, preferably about 6wt% to about 10wt%, for example about 8wt% relative to the weight of the substrate.

The bonding crumb composition may be applied using a conventional crumb applicator so that the composition, when applied, forms a complete shell covering the entire surface of the substrate.

The second aqueous coating liquid preferably contains about 10wt% to about 50wt% of cellulose gum by weight of the dry matter that is contained in said coating liquid. Preferably, the cellulose gum is a cellulose ether, most preferably methyl cellulose.

The secondary aqueous coating may comprise an aqueous mixture of the following ingredients by dry weight:

| | |
|---|---|
| cellulose gum | 15-35wt% |
| modified starch | 15-40wt% |
| hydrocolloid | 20-40wt% |
| protein component | 10-30wt% |
| Total | 100wt% |

The ingredients may be combined in water to provide a solution containing 0.7wt% to 1.2wt%, preferably about 1.0wt%, of solids in an aqueous solution.

Preferably the secondary aqueous coating comprises, by weight of dry mater:

| | |
|---|---|
| cellulose gum | 20-30wt% |
| modified starch | 20-40wt% |
| hydrocolloid | 20-30wt% |
| egg albumen | 10-30wt% |
| Total | 100wt% |

A particularly advantageous secondary coating liquid comprises, by weight of dry matter:

| | |
|---|---|
| cellulose gum | 25wt% |
| modified starch | 35wt% |
| xanthan gum | 25wt% |
| egg albumen | 15wt% |
| Total | 100wt% |

Vegetable oil in an amount of about 1wt% to about 10wt%, preferably about 5wt%, may be added to the secondary coating solution.

A moisture controlling metal salt may be added to the secondary coating liquid. An amount of about 2wt% to about 5wt%, preferably about 3wt%, may be employed. The microwave absorbing metal salt may be selected from the microwave absorbing metal salt compounds disclosed above. Preferably the moisture controlling salt is a calcium salt, especially calcium phosphate.

The pickup of the secondary coating liquid may be 10-20wt%, typically about 15wt% of the weight of the bonding crumb coated portion.

Any excess of the aqueous coating liquid may be removed using an air knife or other blower.

One or more layers of outer crumb may be applied to the secondary coating.

The invention further provides a frozen, microwaveable, coated food product comprising:
a core of cooked edible material,
a fried crumb coating that completely envelops the core of cooked edible material, said fried crumb coating containing at least 0.5wt% of a moisture controlling metal salt selected from: metal phosphates, metal carbonates, metal hydroxides, metal citrates, metal gluconates and combinations thereof.

Use of calcium phosphate as the moisture controlling salt is particularly advantageous.

In accordance with a preferred embodiment the fried crumb coating includes from about 2wt% to about 10wt%, most preferably from about 4wt% to about 8wt% of the moisture controlling metal salt.

The moisture controlling metal salt may be wholly included in the one or more crumb layers or may be partially contained in one or more aqueous coating layers adjacent the crumb layers, for example to cause the crumb to adhere to the substrate.

The moisture controlling metal salt may be added to the dough composition from which the crumb is extruded for example as disclosed in WO2010/00110. Alternatively the salt may be applied as a powder, solution or suspension to the extruded crumb either before or after drying.

In this product the moisture controlling metal salt preferably is a salt of a metal selected from: iron, calcium magnesium, zinc, copper, sodium, potassium and combinations thereof.

Even more preferably the microwave absorbing metal salt is calcium phosphate.

In preferred embodiments of this invention the formulations consist essentially of the ingredients recited, in the sense that any additional ingredients are not present in a sufficient amount to affect the essential properties and characteristics of the product. In further embodiments the products consist only of the recited ingredients.

Use of a process in accordance with this invention confers several advantages particularly in comparison to conventional battered and crumbed products. The breaded crust may be lighter and thinner than for a battered product. For example the weight of the crumb may be 10-20%, typically 15%, of the weight of a battered coating. The reduced amount of crust results in a reduced amount of starch providing a less starchy taste, allowing the flavoured texture of the crumb and substrate to be more readily appreciated by a consumer.

The fried coating on one side of the present food product preferably has an average thickness of 1 to 8 mm, more preferably of 1.5 to 5 mm, and most preferably of 1.8 to 4 mm.

The invention provides a microwaveable frozen product that is a product which has been cooked before freezing and which can be reheated in a microwave or combination microwave/thermal oven to give a satisfactory product with a succulent core and crisp crumb coating. Products of this invention may be also reheated using a conventional thermal oven.

The core of cooked edible material preferably has a weight equal to about 50wt% to about 95wt% and the fried coating has a weight equal to about 5wt% to about 50wt% of the total weight of the food product.

The benefits of the present invention are particularly evident in embodiments in which the core of edible material contains an appreciable amount of water. During microwave reheating in particular, some of the water contained in the core of the product will turn into steam. Although we do not wish to be bound by theory, it is believed that the fried coating of the present product is permeable to the steam that is generated within the core of the product, with little absorption of steam, thus retaining its crisp nature. Typically the core of edible material contains at least 15wt%, more preferably at least 25wt%, and most preferably at least 30wt% water. The water content of the core material normally does not exceed 90wt%.

The coated food product of the present invention is suitably prepared by frying the product for a sufficiently long time to ensure that the edible material that makes up the core is fully cooked. Thus the product can simply be reheated in a microwave without the need for further heating for a sufficiently long period as necessary to completely cook it. The product of this invention may withstand such a prolonged period of frying without detriment. In contrast, conventional coated products may be damaged by prolonged frying.

The use of a hydrocolloid-containing milled dough extrudate in both the bonding crumb and the coating crumb coating offers a further advantage that, together with the aqueous coating layers, these crumb coatings form a shell which may act as a barrier to penetration of oil into the core of the portion during the prolonged period of frying. Thus, the two crumb layers made of the aforementioned milled dough extrudate produce a fully cooked fried product having a relatively low fat content. Surprisingly, this lower fat content has virtually no adverse effect on the eating quality of the coated food product that is obtained by the present method. Typically, the fried coating of the coated food product has a fat content that is substantially lower, for example at least 10% lower, than that of a coated food product that is identical except for the fact that it was prepared using ordinary crumb. Preferably, the coating has a fat content of less than 20wt%, more preferably a fat content of about 2wt% to about 15wt%, and most preferably of 4-12wt%. Here the term fat refers to lipids selected from; triglycerides, diglycerides, monoglycerides, free fatty acids, phospholipids and mixtures thereof.

The coating of the present food product possesses unique properties. Not only does this coating absorb little fat during frying, but it also may absorb a reduced amount of water. Furthermore, the fried coating may be very stable in the presence of humidity. This special quality explains why steam produced during microwave reheating of the edible core can escape from the product without causing the fried coating to become unacceptably soggy. Thus, the fried coating of the present food product typically has a water content of not more than 10wt%, more preferably of not more than 5wt%, after microwave reheating. Here the water content refers to the water content after microwave reheating to a core temperature of 80°C.

The milled extrudate that is contained in the inner crumb layer typically has a mass weighted average particle size of less than 2 mm. More preferably, the milled extrudate in the inner crumb layer has a mass weighted average particle size of less than 1.8 mm, more preferably 0.1 to 1.5 mm, even more preferably 0.15 to 1 mm, and most preferably 0.25 to 0.9 mm.

Typically, the inner crumb layer has a weight of 1-20% of the weight of the fried product. Even more preferably, the inner crumb layer represents about 2wt% to about 10wt% most preferably about 3wt% to about 8wt% of the fried product.

The particle size distribution of the crumb and the milled extrudate can suitably be determined by use of a set of sieves of different mesh sizes in a manner well-known to a person skilled in the art.

The milled extrudate that is employed in the inner crumb layer preferably contains not more than a minor amount of particles having particle size in excess of 1.5 mm. Preferably, not more than 5wt% of the milled extrudate comprised in the inner crumb layer has a particle size of more than 1.5 mm, preferably of more than 1.2 mm.

The milled extrudate that is contained in the coating crumb layer preferably has a mass weighted average particle size of 0.5 to 3 mm, more preferably 1 to 3 mm.

The inner bonding and outer coating crumb layers of the frozen, microwaveable product may contain minor amounts of other crumb material besides the milled farinaceous dough extrudate. The inner crumb layer preferably contains at least 80wt%, most preferably at least 90wt% of the milled farinaceous dough extrudate. Likewise, the outer crumb layer contains at least 80wt%, most preferably at least 90wt% of the milled farinaceous dough extrudate. In preferred embodiments no other crumb materials are present in order to maximise the moisture resistance of the coating.

Typically, the outer coating crumb layer has a weight equal to about 3wt% to about 25wt% of the weight of the fried product. Even more preferably, the coating crumb layer has a weight of about 5wt% to about 15wt%, most preferably of about 8wt% to about 12wt% of the fried product, said percentages being dependent on the shape and dimensions of the product.

The milled extrudate that is employed in the coating crumb layer preferably contains not more than a small amount of fines. Typically, not more than 5wt% of the milled extrudate in the outer crumb layer has a particle size of less than 0.5 mm, preferably of less than 0.8 mm. The absence of fines or dust allows complete coating of the substrate surface with crumb of the desired particle sizes. The presence of fines or dust may prevent or reduce adhesion of the crumb of the substrate by coating the surface thereof.

Microwaveable products of particularly good quality can be obtained by employing a relatively fine milled extrudate in the bonding crumb layer and a relatively coarse milled extrudate in the coating layer. Accordingly, in an especially preferred embodiment of the present food product, the milled extrudate that is contained in the coating crumb layer has a mass weighted average particle size that is at least 50% higher, more preferably at least 100% higher and most preferably 200% to 500% higher than the mass weighted average particle size of the milled extrudate that is contained in the bonding crumb layer.

The hydrocolloid used in the milled extrudate may be any hydrocolloid which forms a gel or otherwise increases viscosity when mixed with water. Preferred hydrocolloids produce a milled extrudate which retains shape when stirred in water having a temperature of 20°C for a period of 60 seconds. Use of a hydrocolloid may provide a degree of water resistance to the milled extrudate reducing any tendency to pick up moisture. Typically, hydrocolloid is contained in the milled extrudate in a concentration of about 0.06wt% to about 4wt%, more preferably about 0.08wt% to about 3wt% and most preferably about 0.1wt% to about 3wt%.

Examples of hydrocolloids that may be used in the milled farinaceous dough extrudate of the inner and outer crumb layers include: natural gums, modified gums, pectin, alginate, arabinogalactan, agar, carrageenan, furcellaran, xanthan and combinations thereof. Preferably, the hydrocolloid is selected from natural gums and combinations thereof.

Examples of natural gums that may suitably be employed as a hydrocolloid in the milled farinaceous dough extrudate include; guar gum, xanthan gum, locust bean gum, gum Arabic, tragacanth, gum karaya, gum ghatti, xanthan gum and combinations thereof. Use of gelatin or starch is not preferred.

Most preferably, the hydrocolloid is selected from: guar gum, locust bean gum, xanthan gum and combinations thereof.

Advantageously, the milled extrudates employed in the bonding crumb and the coating crumb have the same composition.

The bonding crumb and coating crumb are preferably dried to a low water content before use, for example below 2wt%, preferably below 1.5wt%, more preferably below 1.3wt%.

A suitable drying process is disclosed in EP-B-2606745, the disclosure of which is incorporated into this specification by reference for all purposes.

The edible material contained in the core of the coated food product suitably comprises fish, meat, poultry, shellfish, shrimps, dairy products (e.g. cheese), ragu, vegetable, fungi and combinations thereof. According to a particularly preferred embodiment animal material selected from fish, meat, poultry, shellfish, shrimps and combinations thereof represents at least 40wt%, even more preferably at least 60wt% and most preferably at least 80wt% of the core of edible material.

According to a preferred embodiment, the portions of solid substrate contain at least 30wt%, preferably at least 50wt% of animal tissue.

Preferably the core of edible material has a thickness not greater 50 mm, more preferably of not more than 15 mm, most preferably of not greater than 10 mm. This conveniently allows sufficient penetration of microwave radiation within a period of 2 to 3 minutes using the power available in a typical domestic microwave oven.

The portions of solid or solidified substrate that are coated with the aqueous precoating liquid may be solid at ambient temperature or, alternatively, they may be liquid or paste-like at ambient temperature. In the latter case, that is if the substrate is not solid at ambient temperature, the substrate is cooled to a sufficiently low temperature to render it solid, before applying the precoating liquid.

The present method may suitably be used to produce coated food products from portions of solid substrate having a weight in the range 5-300 g. Preferably, the portions of solid substrate have a weight in the range of 10 to 50 g.

The portions of the substrate may be whole portions, for example whole muscle portions such as individual steaks or fillets or larger pieces which may be cut into individual portions after cooking or reheating. Alternatively the pieces may comprise chopped or comminuted pieces, for example, nuggets or minced products which may be pressed or otherwise reconstituted into larger portions. Use of pieces with uniformly sized and weighted cores is preferred.

The solid or solidified substrate may be extruded using a die into portions, for example on a wire mesh conveyor. The temperature of the extruded portions may be in the range of -6 to 6°C preferably of -4 to -1°C to stiffen the substrate to facilitate handling during the subsequent processing steps.

The substrate, especially if it is composed of chopped or comminuted pieces, is preferably impregnated with an aqueous or particulate stabiliser composition, for example by soaking, permeation or injection (for example vacuum pulse injection) into the substrate prior to forming into portions. Examples of suitable stabiliser compositions can be found in WO 97/03572, the disclosure of which is incorporated herein by reference for all purposes. The substrate may be impregnated with the stabiliser composition to the extent that the ingredients are distributed throughout the substrate or impregnate the bulk of the substrate structure. Impregnation may be achieved by soaking, permeation or injection into the substrate prior to forming into portions.

The present method may suitably employ a crumb coating apparatus that comprises a first endless conveyor and a second endless conveyor located below the downstream end of the first conveyor, and beneath a flow of fine crumb particles so that portions fall from the first conveyor onto a layer of particles on the second conveyor. The second conveyor may pass through a curtain of fine crumb falling onto the conveyor surface so that the portion falls onto the crumb causing the crumb to adhere to the surface layer of the aqueous precoating, and is then coated by the falling curtain of crumb particles. The apparatus may comprise a dispenser having an outlet extending across of the conveyor to provide the curtain of fine crumb extending across the path of the portions on the conveyor. A roller may be located above the conveyor on the exit side to bear on the coated portion to improve adhesion of the fine crumb.

Crumb may be applied in excess to the portion using a crumb applicator for example a CrumbMaster (trade mark of CFS). The crumb coated portion may be passed through a roller to improve adhesion.

The total amount of aqueous precoating liquid, batter and crumb that is applied onto the portion in the present method is preferably such that, after frying, the fried portion has a weight that exceeds the weight of the uncoated portion of solid substrate by 25-100%, preferably by 30-60%.

The breaded portion may be fried to cook the substrate and coating layers. The period of cooking is preferably sufficient to completely cook the substrate preventing any health risk in the event that a frozen product is insufficiently reheated from the frozen state in a microwave oven. A comparatively long period of reheating in a microwave oven is undesirable since the substrate is heated from the inside by the microwave energy resulting in a loss of moisture. This may lead to a dry core and damage to the coating layers.

A homogeneous outer crumb coating, with none of the underlying batter layer being exposed is advantageous to provide a uniformly browned appearance after a prolonged period of frying. This may be compared to a product obtained after a shorter period of frying as commonly used for conventionally thermally cooked breaded products.

The bonding crumb that is bound by the aqueous precoating may form a stabilising thermal barrier underlying the secondary coating layer and the second coating of crumb may provide a barrier to escape of moisture and ingress of oil during a prolonged frying stage. The coating layers may also serve to protect the surface of the substrate from excessive local heating during frying.

For conventional thermally cooked breaded products such as chicken nuggets, a short period of frying, for example 90 seconds or less, has been followed by a further period of cooking in a hot air oven. This is disadvantageous for microwave cookable products because the core of the substrate may not be thoroughly cooked during reheating from the frozen state. Prolonged heating of conventional products in a microwave oven leads to excessive loss of moisture and consequent damage to the coating layers.

During the frying step the breaded portion, optionally after having been coated with one or more additional crumb layers, is preferably contacted with the hot oil for 120-300 seconds, more preferably for 130-240 seconds, most preferably for 140-180 seconds.

The hot oil that is used for frying the breaded portion preferably has a temperature of 160-200°C, more preferably 170-195°C and most preferably 175-190°C.

The oil employed preferably is a vegetable oil. The term "vegetable oil" encompasses non-modified vegetable oils, hydrogenated vegetable oils, fractions of vegetable oils (for example olein or stearin fractions), interesterified vegetable oils and combinations thereof.

Preferably the core temperature of the fried portion after frying is greater than 72°C, more preferably greater than 74°C.

Frying in accordance with this invention is advantageous in comparison to flash frying followed by hot air cooking as the latter may not give a coating with desired hardness without moisture loss from the core. However a hot air oven such as an oven belt cooker, may be used to further cook larger products in cases where the frying time is insufficient to fully cook the products, for example for bone-in products or whole muscle products such as chicken breast fillets.

The breaded portion is suitably fried by immersing the breaded portion in the hot oil, for example by passing it through a bath of hot oil by means of a conveyor belt. The frying apparatus preferably comprises a double layer of parallel endless belts both layers passing beneath the oil surface, a portion carried on the lower layer being prevented from floating during frying by contact with the upper layer. The belts may comprise wire screens or other perforated configurations.

It has been found that in order to produce a frozen coated food product that, although it comprises a moist core, can be heated in a microwave or combination oven to yield a ready-to-eat hot product with a crunchy coating, the freezing conditions employed in the process are important. More specifically, it has been found that the core temperature of the fried coated portion should be reduced very quickly after frying, that is it is inserted quickly into the freezer, when the core temperature of the fried portion is still high. Although we do not wish to be bound by theory, it is believed that rapid freezing of the fried portion wherein the dwell time between frying and introduction into the freezer is short enhances the structural integrity of the product, reduces formation of ice crystals and reduces the size of any ice particles which may be formed within the products. If ice crystals are present in a battered breaded product they can become superheated in a microwave oven creating hot spots in the core. Also migration of ice crystals on storage can lead to a build up of localised ice which on heating can result in release of excessive moisture near to the surface coating.

This may be contrasted with conventional processes wherein fried products are allowed to cool before introduction into a freezer.

In a particularly preferred embodiment of the present method, the fried coated portion that is produced by frying of the breaded portion has a core temperature in excess of 70°C and is frozen by introducing said fried portion into a freezer before the core temperature of the fried coated portion has fallen to a temperature of 50°C, and said core temperature is reduced in the freezer to less than -15°C, using cryogenic freezing.

In accordance with a particularly preferred embodiment, the fried coated portion has a core temperature of more than 65°C, preferably of more than 70°C, when it is introduced into the freezer.

The cryogenic freezing of the fried coated portion in the present method suitably comprises contacting said fried portion with a liquid gas, more preferably a cryogen, especially liquid nitrogen.

According to a particularly preferred embodiment, the fried portion has a core temperature of at least 50°C, more preferably of at least 60°C, even more preferably of at least 65°C and most preferably of at least 70°C when it is contacted with the liquid gas.

Preferably, the fried portion is contacted with a liquid gas until the core temperature of the portion is less than -15°C, more preferably less than -20°C and most preferably less than -22°C.

The core temperature of the fried coated portion preferably does not decrease by more than 25°C, more preferably by not more than 20°C and most preferably by not more than 15°C before the fried portion is placed in the freezer, more preferably before it is contacted with liquid gas.

The frozen products may be suitably packaged for storage and distribution. Packaging under an inert atmosphere, for example nitrogen, is preferred.

The frozen product may be reheated or cooked from the frozen state before use using an oven selected from: a microwave oven, a conventional oven or grill, deep or shallow fried, or an oven using a combination of microwave and conventional heating.

The invention is further described by means of example, but not in any limitative sense.

### Example 1

In a pre-processing stage, pieces of chicken or other substrate are cut to an appropriate size or comminuted as required. The substrate pieces are impregnated with a stabiliser composition, as described in Examples 2 and 3. A forming machine is used to form the product. A conventional forming machine may be arranged to extrude chicken substrate pieces having a predetermined thickness and one or more shapes. The pieces are extruded onto a conveyor arranged to carry them to a tempura dipper containing an aqueous coating liquid as described in Example 4 to form a pre-coated product.

The tempura coating apparatus is used to apply the primary aqueous coating that is described in Example 4. This comprises a reservoir for the primary aqueous coating liquid or pre-gel. A first lower conveyor carries pieces beneath the surface of the aqueous liquid. A second upper conveyor prevents the pieces from floating. This ensures complete coating of the pieces. The upper and lower conveyors are disposed in parallel spaced relation to form a channel within which the pieces are located during coating.

A second lower conveyor carries the substrate pieces out of the reservoir beneath the upper conveyor. The substrate pieces emerging from the reservoir pass under an air jet to remove excess liquid.

Following application of the primary aqueous coating a coating of crumb fines is applied using a crumb applicator. The crumb fines may be obtained by milling crumb manufactured in accordance with the disclosure of WO2010/00110.

The fine crumb coated substrates are then passed through a tempura applicator to apply the secondary aqueous coating that is described in Example 5, followed by application of the outer crumb. The substrate pieces which have been coated with primary aqueous coating and crumb fines are passed through a bath of the secondary aqueous coating using a wire mesh conveyor, so that complete immersion of the pieces is achieved.

A first layer of heavy grist coating crumb may be applied to the secondary coated product followed by a lighter grist crumb to infill between the heavy crumb particles. Alternatively, a single outer crumb layer may be employed, particularly when using a large sized outer crumb.

Where two outer crumb layers are used, a first coating of outer crumb may be applied using a conventional crumb applicator. The crumb is preferably sieved to remove fines and small particles. A second coating of outer crumb may be applied to ensure complete covering of the substrate.

A frying time of 2 minutes 30 seconds was used although this may be varied dependent on the weight and size of the particles. The fryer contained rapeseed oil that was heated to a constant temperature of 180°C to 188°C. Pure rapeseed oil is employed.

After frying the core temperature of the products was in the range 74°C-85°C. A small loss of weight was observed due to loss of water from the substrate but this is mostly compensated for by an uptake of oil.

Following frying the hot fried products were directly without delay passed using a conveyor into a cryogenic freezer so that the core temperature of the fried products is reduced to a maximum of -25°C, usually -30°C to -35°C or lower during a period of 30 minutes or less.

The frozen products were packaged in hermetically sealed packages. The packing may be flushed with nitrogen (13) although this may not be used dependent on the required shelf life of the packaged products.

### Example 2: Stabiliser Composition

A stabiliser composition was prepared using the following ingredients:-

| Ingredient | % |
|---|---|
| cellulose gum (Methocel™ A4M) | 15.0 |
| modified starch (Thermflo™) | 24.0 |
| polydextrose | 40.0 |
| xanthan gum | 6.0 |
| egg albumen | 15.0 |
| Total | 100.0 |

The composition was dissolved in water to produce a solution with a concentration suitable to stabilise the particular substrate in use. To this end the dry powder mixture was partially hydrated in a tub and then poured into a bowl chopper. The bowl chopper was then run for two to three minutes until the mixture was fully hydrated. The mixture can be hydrated directly in the bowl chopper if required. Alternatively, the stabiliser may be hydrated using a high shear mixer fitted with a general purpose head.

This general purpose formula may be modified to increase its efficiency in specific substrates. The above formula may be modified by addition of citric acid (up to 1%) and ascorbic acid (up to 2%) with the polydextrose (Litesse II (Trade Mark)) being reduced accordingly.

### Example 3 - Impregnation of Substrate with Stabiliser Composition

A chicken mixture for chicken dippers or nuggets was prepared with the following composition which was prepared as a dry mixture, as an alternative to use of a hydrated stabiliser composition. The stabiliser of Example 1 was used.

| Ingredient | % |
|---|---|
| chicken emulsion | 20% |
| skin - 3mm | 18% |
| chicken breast - 10mm | 50% |
| water | 2% |
| rusk | 2% |
| stabiliser (Example 1) | 5% |
| seasoning | 3% |
| Total | 100% |

The chicken breast was chilled to -3°C and minced using a 10mm plate. After mincing, the temperature was 0-3°C. Water was added with mixing. A chicken emulsion comprising the following ingredients was added with mixing:

| Ingredient | % |
|---|---|
| chicken skin | 44% |
| water | 44% |
| soya isolate | 11% |
| salt | 1% |
| Total | 100% |

The stabiliser in accordance to Example 1 was added and mixed thoroughly. Rusk was added with mixing following by seasoning. A dry powder flavouring was preferred. The composition was allowed to dissolve in use in water which was present in the substrate in order to form an aqueous stabiliser solution in situ.

A vacuum was applied to the mixture to consolidate the structure following which the chicken mixture was chilled to -3°C and formed into shaped pieces.

A similar procedure was used for other comminuted meat products. Large particulate cores may be manufactured using a similar method.

### Example 4 - Primary Aqueous Coating Liquid

(a) The following mixture was prepared:

| Ingredient | % |
|---|---|
| modified starch (Thermflo) | 35% |
| thickener (Methocel A4M) | 25% |
| xanthan gum | 25% |
| egg albumen | 15% |
| Total | 100% |

The mixture was dissolved in water to form a 1% solution using a CFS Scanbrine mixer with paddle agitation. The solution was left to stand for 24 hours to form a fully hydrated gel or viscous solution.

The following ingredient was added as a fine powder to the solution with stirring to form a suspension which did not form a sediment during coating of the substrate.

| | |
|---|---|
| Calcium phosphate | 3% |

A pump is necessary to run the machine but after a short while bubbles may form in the gel solution in the applicator. To prevent this problem food grade anti foaming agents can be used. Polydimethylsiloxane is preferred but calcium alginate, methyl ethyl cellulose, methylphenylpolysiloxane or polyethylene glycol can also be used.
(b) The solution of Example 4(a) may be used directly. Alternatively, ingredients were combined as follows:

| Ingredient | % |
|---|---|
| mixture of Example 4(a) | 0.9% |
| vegetable oil | 5% |
| iron phosphate | 3% |
| water | 91.1% |
| Total | 100% |

### Example 5 Secondary Aqueous Coating Liquid

(a) A secondary coating liquid was prepared by mixing the following ingredients:

| Ingredient | % |
|---|---|
| modified starch (Thermflo) | 35% |
| thickener (Methocel A4M) | 25% |
| xanthan gum | 25% |
| egg albumen | 15% |
| Total | 100% |

The mixture was dissolved in water to form a solution containing 1% of the listed dry ingredients.
(b) The solution of Example 5(a) may be used directly. Alternatively a secondary coating liquid was prepared by mixing the following ingredients:-

| Ingredient | % |
|---|---|
| Composition of Example 5(a) | 1% |
| vegetable oil | 5% |
| water | 94% |
| Total | 100% |

### Example 6 - Preparation of Crumb

A hydrocolloid containing crumb was produced by extrusion of a farinaceous dough mixture as disclosed in WO2010/00110. A bonding crumb was produced by milling the crumb and sieving to a particle size less than 0.8mm.

### Example 7 - Preparation of Bonding Crumb Composition

A bonding crumb composition was prepared from the following ingredients:

| Ingredients | % |
|---|---|
| Fine brown crumb, less the 0.8mm | 80.0% |
| Calcium phosphate | 6.0% |
| Sodium carbonate | 2.0% |
| Maltodextrin | 10.0% |
| Vegetable oil | 2.0% |
| Total | 100% |

### Example 8 - Production of Microwaveable Frozen Chicken Nuggets

Stabilised substrates prepared in accordance with Example 3 were coated with a primary aqueous coating liquid as described in Example 4. A bonding crumb coating as described in Example 7 was applied followed by a secondary aqueous coating as described in Example 5.

Next, a coating of the coarse crumb of Example 6 (particle size 3-4mm) is applied using a CrumbMaster applicator manufactured by CFS, Bakel, Netherlands.

Following application of the first and second crumb layers the coated substrates enter a fryer.

Heated oil contained in an elongate reservoir is heated to a constant temperature of 180 to 188°C. Pure rapeseed oil is employed.

Parallel upper and lower conveyors were used to prevent the substrate pieces from floating during passage through the fryer. A frying time of 2 minutes 20 seconds was used although this may be varied dependent on the weight and size of the particles. After frying the core temperature of the particles was in the range 74-85°C. A small loss of weight was observed due to loss of water from the substrate but this is mostly compensated for by an uptake of oil.

Following frying the fried products are transferred directly and without delay to a freezing station.

The fried products when removed from the heated oil had an external temperature of about 180°C and a core temperature of about 90°C. The products were transferred by the conveyor into a cryogenic freezer during a period of not less than 2 minutes. During this time the temperature of the outer crumb was reduced due to contact with the atmosphere but the temperature of the core may for a brief period due to transfer of heat from the outer crumb layer to the core. On entry into the freezer the core temperature may be between 70°C and 100°C, generally about 75°C.

The fried product was immediately transferred to a cryogenic freezer which reduced the core temperature to a maximum of -25°C, preferably -30°C. The time from the removal from the fryer to entry into the freezer was less than 2 minutes.

The transfer from the fryer to the freezer is arranged so that the core temperature of the product was reduced from 75°C to -30°C during a period not longer than 15 minutes.

### Example 9 Use of calcium phosphate

Microwaveable chicken nuggets were prepared a previously described, with the secondary coating liquid containing 3wt% of calcium phosphate. A control batch did not have added calcium phosphate. The products were frozen and the moisture content of the coatings was measured after final preparation and storage for periods of 0, 2, 4, 6, 8 and 10 weeks in a freezer. The moisture levels were measured by removing the coatings and measurement of the water content of the removed costing material.

A first batch of the frozen products was reheated in a solo microwave oven. A second batch of the products was reheated using a combination microwave/thermal oven. The results are as shown below.

The products which were reheated in a solo microwave oven and in a combination microwave and thermal oven both showed a significant reduction in the moisture level of the coating in comparison to the control samples. The reduction of water content was observed to be largely independent of the storage time in the freezer. The products which included added calcium phosphate were crisper and were organoleptically superior to the control samples.

Moisture level coating after final preparation in solo microwave in relation to storage time in freezer

| week | 0 | 2 | 4 | 6 | 8 | 10 |
|---|---|---|---|---|---|---|
| With calcium phosphate | 14.6 | 15.6 | 21.1 | 13.2 | 14.9 | 16.5 |
| Without calcium phosphate | 15.9 | 20.0 | 21.5 | 22.9 | 20.6 | 23.1 |

Moisture level coating after final preparation in combi microwave in relation to storage time in freezer

| week | 0 | 2 | 4 | 6 | 8 | 10 |
|---|---|---|---|---|---|---|
| With calcium phosphate | 12.9 | 9.3 | 9.0 | 8.4 | 11.1 | 9.6 |
| Without calcium phosphate r | 17.9 | 18.0 | 21.7 | 17.4 | 17.6 | 16.9 |

## Claims

1. A method of preparing a frozen, microwaveable, coated food product comprising the successive steps of:
providing a portion of a solid or solidified substrate;
preparing a breaded portion comprising the portion of substrate and a crumb-based coating by the steps of:
coating the portion with a first aqueous coating liquid to form a primary coated portion;
applying a coating of bonding crumb to the primary coated portion to form a bonding crumb coated portion;
applying a second aqueous coating liquid to the bonding crumb coated portion to form a secondary coated portion;
applying a coating of coating crumb to the secondary coated portion to form a breaded portion;
frying the breaded portion by contacting said breaded portion for at least 100 seconds with hot oil having a temperature of at least 150°C; and
freezing the fried coated portion;
wherein a moisture controlling metal salt is present in at least one of the coating liquids and crumbs used in the preparation of the breaded portion, said moisture controlling metal salt being selected from metal phosphates, metal carbonates, metal hydroxides, metal citrates, metal gluconates and combinations thereof;
wherein the total amount of the metal salt provided in the crumb-based coating may be at least 0.5wt%, preferably 1wt% to 6wt% by weight of the dry matter contained in said crumb-based coating.

2. A method of preparing a frozen, microwaveable, coated food product comprising the successive steps of:
providing a portion of a solid or solidified substrate;
coating the portion with a first aqueous coating liquid to form a primary coated portion;
applying a coating of bonding crumb to the primary coated portion to form a bonding crumb coated portion;
applying a second aqueous coating liquid to the bonding crumb coated portion to form a secondary coated portion;
applying a coating of coating crumb to the secondary coated portion to form a breaded portion;
frying the breaded portion by contacting said breaded portion for at least 100 seconds with hot oil having a temperature of at least 150° C; and
freezing the fried coated portion;
wherein the first aqueous coating liquid and/or the second aqueous coating liquid contains at least 0.5wt%, preferably 1wt% to 6wt% of a moisture controlling metal salt selected from metal phosphates, metal carbonates, metal hydroxides, metal citrates, metal gluconates and combinations thereof.

3. A method according to claim 1 or 2, wherein the moisture controlling metal salt is a salt of a metal selected from iron, calcium, magnesium, zinc, copper, sodium, potassium and combinations thereof.

4. A method according to claim 3, wherein the moisture controlling metal salt is calcium phosphate.

5. A method according to any one of the preceding claims, wherein the moisture controllingmetal salt is selected from iron(III) orthophosphate (FePO₄), iron(III) pyrophosphate (Fe₄(P₂O₇)₃), monocalcium phosphate (Ca(H₂PO₄)₂), dicalcium phosphate (CaHPO₄), tricalcium phosphate (Ca3(PO₄)₃OH), acidic calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium metaphosphate ([Mg(PO₃)₂]ₙ), magnesium pyrophosphate (Mg₂P₂O₇), trizinc phosphate (Zn₃(PO₄)₂), zinc pyrophosphate (Zn₂P₂O₇), copper(II) pyrophosphate (Cu₂P₂O₇), sodium aluminium phosphate, acidic sodium aluminium sulphate, calcium carbonate (CaCO₃) magnesium hydroxide (Mg(OH)₂), tricalcium citrate, calcium gluconate, sodium pyrophosphate (Na₄P₂O₇) and combinations thereof.

6. A method according to claim 5, wherein the moisture controlling metal salt is selected from iron(III) orthophosphate (FePO₄), iron(III) pyrophosphate (Fe₄(P₂O₇)₃), acidic calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium pyrophosphate (Mg₂P₂O₇), magnesium hydroxide (Mg(OH)₂), sodium pyrophosphate (Na₄P₂O₇) and combinations thereof.

7. A method according to claim 6, wherein the moisture controlling metal salt is selected from iron(III) orthophosphate (FePO₄), iron(III) pyrophosphate (Fe₄(P₂O₇)₃) and combinations thereof.

8. A frozen, microwaveable, coated food product comprising:
a core of cooked edible material,
a fried crumb coating that completely envelops the core of cooked edible material, said fried crumb coating containing at least 0.5wt%, preferably at least 2wt% of a moisture controlling metal salt selected from: metal phosphates, metal carbonates, metal hydroxides, metal citrates, metal gluconates and combinations thereof.

9. A food product according to claim 8, wherein the moisture controlling metal salt is a salt of a metal selected from iron, calcium magnesium, zinc, copper, sodium, potassium and combinations thereof.

10. A food product according to claim 9, wherein the moisture controlling metal salt is calcium phosphate

11. A food product according to any one of claims 8 to 10, wherein the moisture controlling metal salt has a water solubility at 20°C of less than 60 g/l, more preferably of less than 20 g/l, even more preferably of less than 5 g/l.

12. A food product according to any one of claims 8 to 11, wherein the moisture controlling metal salt is selected from iron(III) orthophosphate (FePO₄), iron(III) pyrophosphate (Fe₄(P₂O₇)₃), monocalcium phosphate (Ca(H₂PO₄)₂), dicalcium phosphate (CaHPO₄), tricalcium phosphate (Ca3(PO₄)₃OH), acidic calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium metaphosphate ([Mg(PO₃)₂]ₙ), magnesium pyrophosphate (Mg₂P₂O₇), trizinc phosphate (Zn₃(PO₄)₂), zinc pyrophosphate (Zn₂P₂O₇), copper(II) pyrophosphate (Cu₂P₂O₇), sodium aluminium phosphate, acidic sodium aluminium sulphate, calcium carbonate (CaCO₃) magnesium hydroxide (Mg(OH)₂), tricalcium citrate, calcium gluconate, sodium pyrophosphate (Na₄P2O₇) and combinations thereof.

13. A food product according to claim 12, wherein the moisture controlling metal salt is selected from iron(III) orthophosphate (FePO₄), iron(III) pyrophosphate (Fe₄(P₂O₇)₃), acidic calcium pyrophosphate (CaH₂P₂O₇), monomagnesium phosphate (Mg(H₂PO₄)₂), dimagnesium phosphate (MgHPO₄), trimagnesium phosphate (Mg₃(PO₄)₂), magnesium pyrophosphate (Mg₂P₂O₇), magnesium hydroxide (Mg(OH)₂), sodium pyrophosphate (Na₄P₂O₇) and combinations thereof.

14. A food product according to claim 13, wherein the moisture controlling metal salt is calcium phosphate.

15. A food product according to any of claims 8 to 14, wherein the food product is obtainable by a method according to any one of claims 1 to 7.
